# EUROPEAN PATENT SPECIFICATION

(11) **EP 0 708 413 B1**
(45) Date of publication and mention of the grant of the patent: **10.04.2002**
(21) Application number: 95306977.0
(22) Date of filing: 02.10.1995
(51) Int. Cl.: G06K 19/073, G07F 7/08

(54) **Circuit and its method of operation**
Schaltkreis und seine Wirkungsweise
Circuit et son mode de fonctionnement

(30) Priority: 30.09.1994 ZA 9407654
(43) Date of publication of application: 24.04.1996
(73) Proprietor: MICROCHIP TECHNOLOGY INC., Chandler, AZ 85244 (US)
(72) Inventor: Bruwer, Frederick Johannes, Verwoerdburg (ZA); Pretorius, Pieter Jacobus, Verwoerdburg (ZA); Dippenaar, Theodor Johannes, Verwoerdburg (ZA)
(74) Representative: Patry, Didier Marcel Pierre

(56) References cited:
- EP-A- 0 281 057
- EP-A- 0 297 209
- EP-A- 0 375 386
- EP-A- 0 427 465
- EP-A- 0 552 392

## Description

### BACKGROUND OF THE INVENTION

This invention relates in broad terms to the operation of a circuit, as a token card, in an access control system, and in similar applications. The invention is also concerned with a method of performing a transaction on a circuit, and with a circuit which can be programmed for a particular service and which can be loaded or reloaded with tokens. The invention relates specifically to integrated circuits (IC's) for such cards, and to IC's which can be used for access control encoders operating via various communication media such as infra red, inductive coupling, RF or microwave links.

Existing smart card technology can be divided into memory based systems and more complex microprocessor based systems. These systems have been applied for different applications of electronic money transfer and cash cards. The need for an electronic payment medium for high volume transactions and relatively low monetary value per transaction has demanded inexpensive disposable cards.

The general areas of application of memory based smart cards are public telephones, commuting systems, domestic energy distribution and vending systems, access control and authentication. In these applications the service providers usually provide facilities in units of payment. These smart cards are therefore referred to as token cards. The cards are usually not interchangeable between different services or service providers and are programmed for a particular type of service and a specific service provider.

With the rapid growth which is taking place towards prepaid cashless transactions, existing token card systems are becoming less acceptable due to their limited functionality as well as the lack of built-in security mechanisms. Considerations in the usage of token cards are the cost per token, the number of tokens which are programmed per card, the possible frequency of use and the ease of use. In order to keep the cost of token cards as low as possible the security, and thus the complexity, of these cards have been overlooked. The security aspect has become contentious as token card fraud becomes easier with changes in technology. An additional requirement in some applications is the ability to recharge or reload a card with tokens, a factor which has proved to be a major obstacle.

A so-called link-based token card has been in use for a number of years round the world in card-based payphone systems. The technology which is used provides the capability of an alterable structure on silicon and the tokens are implemented as respective intact fuses.

A card of this type is programmed by an issuer with the required number of fuses or tokens intact. One unit of service is granted by a service provider after a link or fuse has been successfully removed or blown on the card. The link-based token card is uncomplicated and cost effective to implement. Tokens are represented in a straightforward manner. This type of card is compatible with technology available a few years ago. Once all the links have been fused the card can only be discarded making it impossible to reload the card. This prevents illegal reloading. The fusing action is usually permanent making the reloading of a specific card impossible or at least non-viable.

On the other hand a link-based token card does exhibit certain disadvantages, particularly in the security area. The cards are all the same and no means of identification of a specific card exists, rendering service auditing impossible. Electronic fraud is easy as a valid card can either be cloned or transactions can be recorded and replayed between a terminal and a valid card. This action is not traceable and thus cannot be detected nor prevented. A card cannot be blacklisted because the cards are not numbered and so are not individually identifiable.

To limit fraud and add to the functionality of the link-based card a secure logic memory chip solution has been developed.

The link-based system has a one-to-one relationship between tokens and links, requiring a memory area the extent of which is directly related to the number of tokens on the chip. With the introduction of non-volatile memory it has become possible to represent the number of remaining tokens in a more compact way. Tokens on a card can be held in one or more counters that will only be decremented and, once exhausted, the card is discarded. The problem remains however that the information on the card's IC is in the open and can easily be read and used to commit fraud.

Security related enhancements to this type of IC are accomplished by using an IC identification number, secret codes stored on the IC, and verification data unique to an IC.

The secure logic memory IC is manufactured in three stages, namely the manufacturer stage, the issuer stage and the user stage.

During the manufacturing or the first stage, a card IC receives a unique identity or serial number. This information is stored in PROM-type memory and cannot be altered during the lifetime of the IC. This enables transactions which are performed using the card to be monitored.

The card with the IC leaves the manufacturing stage with a secret batch or transport code stored in non-readable memory. In the second or issuer stage the card is placed in the issuer mode by successful presentation of the transport code. This prevents the manufacturing of unauthorised cards. The required number of tokens is now loaded into the card. The card then enters the third or user stage by blowing a fuse, disabling the reloading of tokens.

A secret derived number is calculated using an issuer specific function and the IC or card serial number and is stored on the card. When the card is used at a terminal, this number is calculated by the terminal using the serial number to determine if a legitimate card has been presented. This offers some degree of verification of the card since the secret derived number cannot be changed nor recalculated. Such a system is disclosed in EP-A-0 552 392 and EP-A-0 427 465.

These cards offer a number of advantages. The number of tokens on a card is represented in a more compact way leaving more silicon area for additional functions. The transport code provides protection against the fraudulent loading of tokens. Card tracking is possible as each card contains a unique serial number and a blacklist can be downloaded to each terminal, eliminating the use of an unauthorised card. The derived card number stored on each card makes it difficult to falsify a card as the user cannot calculate the derived number from the serial number if the algorithm is unknown.

On the other hand these cards do suffer from certain disadvantages. Fraud detection and the administering of blacklisting facilities can often prove to be impractical. The cloning of a card is relatively easy as all the data on the card can be read directly. Transaction sequence replay between a terminal and a card is still possible as the replay and the reaction of a valid card cannot be distinguished from one another.

International standards prescribe the physical format and the electronic interface of token cards. Communication between a smart card and a reader is via an electronic interface. This interface is prescribed by the International Standards Organisation (ISO) and the standard normally applied is ISO 7816.

### SUMMARY OF THE INVENTION

It is an object of the present invention to provide a method of performing a transaction on a circuit, which may be an IC, which offers increased security.

It is a further object of the invention to provide a circuit, which may be an IC, for use, for example, in a token card.

The invention provides, in the first instance, a method according to claim 1.

The challenge may include a number which is at least partly random, and may include a command or other information.

The response may be an encoded value produced by an algorithm operating on a secret derived key, the challenge and other information, eg a counter on the circuit. The secret derived key may be derived from the circuit serial number and an issuer's key. When the memory map or other information on the circuit is used along with a challenge, the response represents a hashing function, or a form of electronic signature, of the information on the circuit.

The encoding function that is referred to in this description can be a linear or non-linear encoding function, or an encryption function, and may be represented by the equation:f_{encode} (Secret or derived key, (serial number or challenge)) = encoded information.

The preferred encoding function is a non-linear function. This type of function is often used in the field of cryptography and is usually chosen for its characteristics which prevent or at least inhibit the prediction of the input, even if the output is known.

The response may be validated by transferring a serial number from the circuit to the terminal, performing an encoding function on the transferred circuit serial number and on an issuer's key to produce a secret derived key, performing an encryption function using the secret derived key on the challenge and other information, and comparing the encoded output to the transferred response.

The decrement command may cause the decrementing of a required number of tokens on the circuit The decrement command may be regarded as having been successfully implemented if the required number of tokens is in fact available on the circuit and if the number of tokens is decremented in accordance with the decrement command.

The circuit may be reloaded with tokens by transferring to the circuit a derived validation key, comparing the transferred derived validation key to a derived validation key still on the circuit and, if the comparison is acceptable, opening the circuit for the reloading of tokens.

The circuit may Initially carry a transport code which may be specific to an issuer and which permits the issuer to load tokens onto the card during an initial stage. The transport code may be replaced by the derived validation key to prevent unauthorised programming or reloading of the circuit if the transport code becomes known.

The invention also provides a circuit according to claim 7. Embodiments of the invention are covered by the dependent claims.

### BRIEF DESCRIPTION OF THE DRAWINGS

The invention is further described by way of example with reference to the accompanying drawings in which:
Figure 1 is a block diagram of an IC according to the invention,
Figure 2 is a block diagram illustrating the operation of an IC and a terminal, and
Figure 3 is a memory map of an IC according to the invention showing memory variables that can be defined and altered at manufacturing, issuing and user stages in the cycle of the IC.

### DESCRIPTION OF PREFERRED EMBODIMENT

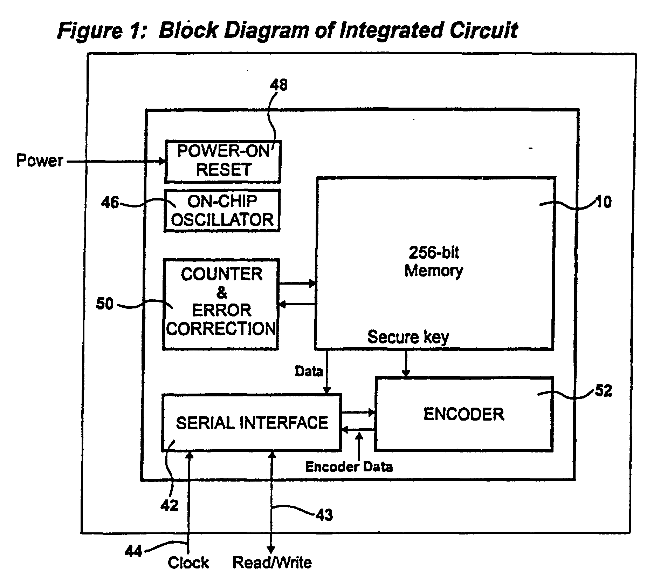

Referring particularly to Figure 1 of the accompanying drawings, the IC of the invention includes a 256 bit non-volatile random access memory (RAM) 10, using EEPROM technology.

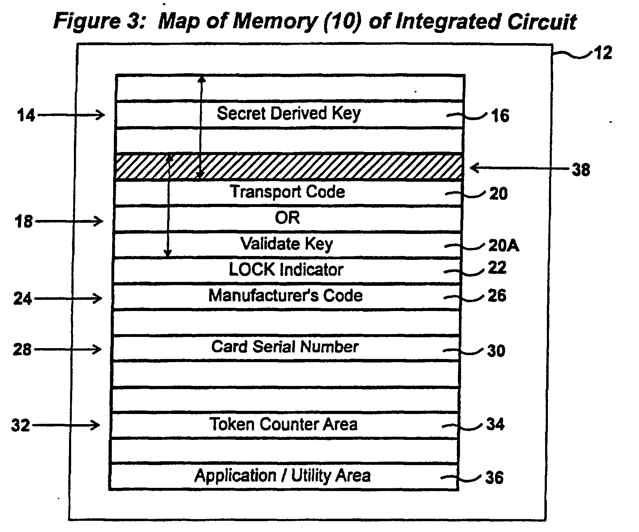

Figure 3 shows a map 12 of the memory area, which is divided into sections which include storage 14 for a secret derived key 16, storage 18 for a transport code 20 or derived validation key 20A, a lock indicator area 22, storage 24 for a manufacturer's code 26, storage 28 for a card serial number 30, an area 32 for a token count 34, and an application or utility area 36.

The secret derived key 16 uses 64 bits of memory. The transport code 20 or derived validation key 20A uses 64 bits with 16 bits overlapping with 16 bits of the secret derived key. The overlapping portion is indicated by hatching 38.

The lock indicator area 22 is used to indicate if the card is locked for access from outside or not and uses 16 bits.

The manufacturer's code 26 comprises 16 bits and contains a secret code which is used to prevent the issuing of IC's by unauthorised manufacturers.

The IC serial number 30 consists of 48 bits.

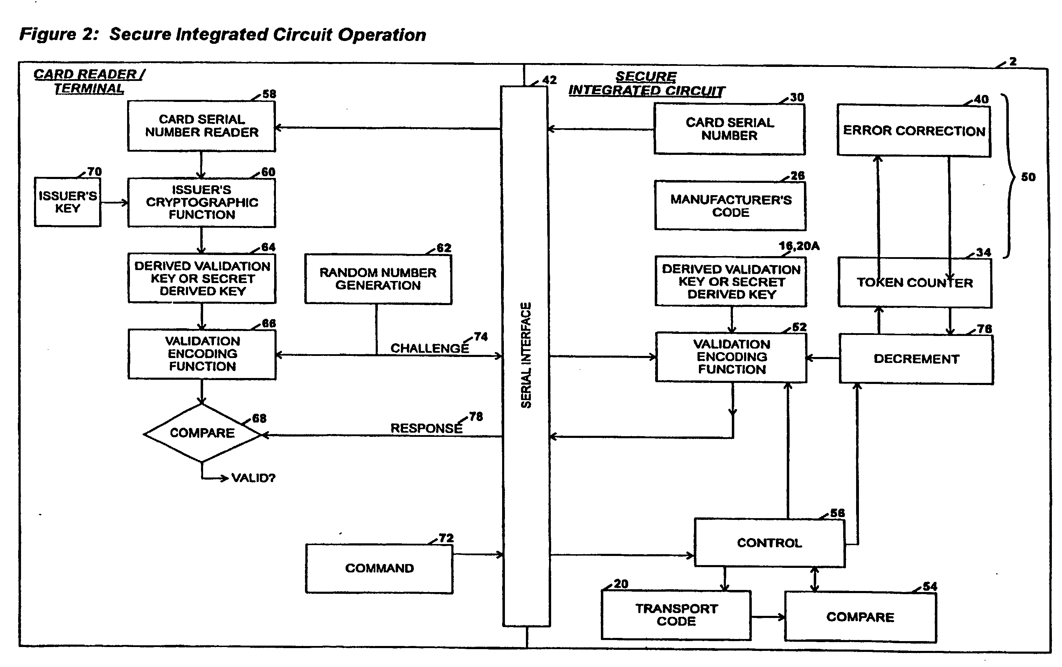

The area 34 consists of 48 bits and stores the number of tokens issued by an issuer as well as an error correction procedure 40, see Figure 2, that operates on the token counter area to ensure reliable token counter operation.

The application or utility area 36 consists of 16 bits and is used for general IC detail or particulars pertaining to an application.

The numbers of bits used for each element are given as practical examples in this description. The bit lengths are chosen short enough to ensure that the implementation is practical to realise, but long enough to be secure for the applications for which the invention is intended.

Referring to Figure 1, the IC includes a serial interface 42 which provides a standard ISO 7816-3 interface 43 to the IC, consisting of serial synchronous write information to the IC or serial synchronous read information from the IC. The interface also includes provision 44 for clock information for the IC.

Commands which can be input to the IC via the serial interface 43 include reset e.g. on power up, read from, write to, submit transport code to, decrement token on, primary validate and secondary validate. The commands are issued conforming to a defined protocol.

The timing of internal and external electrical signals is controlled by an on-chip oscillator 46.

A power-on reset circuit 48 is provided to reset the circuitry of the IC at power-on to ensure that the IC's circuits are in a known state when it is activated. The circuit 48 also ensures that the IC is not functional below a predetermined supply voltage.

A counter and error correction function is carried out by a module 50. The IC also includes processing means 52 for carrying out a validation encoding function - see Figure 2. The encoding function that is referred to in this description can be a linear or non-linear function or an encryption function.

Figure 2 is a block diagram illustrating the operation of the IC in conjunction with a IC reader or terminal. The serial interface 42 of the IC is positioned on a centre line of Figure 2. Components to the left of the serial interface are associated with the terminal while the components on the right of the serial interface are associated with the IC.

In Figure 2 like reference numerals are used to indicate items which are similar to the corresponding items described in connection with Figures 1 and 3.

The life cycle of an IC consists of three stages namely the manufacturer, issuer and user stages.

During the manufacturer stage access to the memory of the IC is provided by special physical access controls as well as access protection on the IC itself. The access controls are typically realised by probing special contacts directly on the circuit. The IC serial number 30 and the manufacturer's code 26 are programmed into the IC. The secret transport code 20 is also programmed into the IC. This code is not readable from outside the IC after this stage. The secret transport code is used to identify a specific issuer. The secret transport code is protected by the electomic circuits of the IC.

While In the issuer stage, application specific information is programmed into the IC. Application specific information relates to the specific application that the IC will be used for, for example a specific type of vending machine. To activate the programming the correct corresponding secret transport code must be presented by the issuer to the IC. The presented transport code is compared with the stored transport code 20 using a compare function 54. Access to the memory area 12 of the IC is protected by a control access function 56.

If the correct transport code is presented to the IC then the memory area of the card can be accessed. This permits the application or utility area 36 to be programmed. The information programmed into this area may be diverse and for example may relate to a terminal with which the IC can be used, restrict the application of the IC in a particular way, or contain any other required information.

The token counter value 34 is also programmed into the area 32. The number of tokens depends on the application of the IC.

The secret derived key is calculated by the issuer using the IC serial number 30 and a secret function which is defined by the issuer, and then stored.

After the initial use of the transport code by the issuer a new secret value can be stored in place of the transport code 20 as the derived validation key 20A.

The user stage follows the issuer stage. Only limited read access to the memory is permitted. Access to the memory is not permitted by special circuitry provided on the IC. The contents of the memory can only be modified by decrementing the token counter value 34, or by writing a value to the application or utility area 36. Any other access is restricted to the reading of the contents of the memory, excluding the secret derived key 16.

Referring to the left of the serial interface in Figure 2, the IC reader or terminal includes an IC serial number reader 58, an encoding function 60 of the issuer, a random number generator 62, storage 64 for a derived validation key or a secret derived key, a validation encryption function 66, a comparison module 68, storage for an issuer's key 70, and a command generator 72.

When the IC is presented to the terminal the IC's serial number 30 is read by the reader 58 in the open i.e. without any encoding of the IC's serial number taking place. A derived validation key or secret derived key 64 is calculated by the terminal using the serial number, the issuer's key 70, and the encoding function 60.

Commands are issued to the IC via the module 72. Commands can consist of but are not limited to, a validation command, a token decrement command or read card serial number command. At the same time a random number 74 produced by the generator 62 is transferred to the IC.

Reference is made particularly to the situation in which the command from the module 72 is a token decrement command. The decrement command can be a coded bit string that can be decoded by the control 56 to enable the chosen action. The control 56 issues a command to a token decrement unit 76, to decrement the token count stored in the token counter 34 that forms part of the memory 10. If this function is carried out successfully, and this Implies that the required number of tokens are present in the token counter 34 and checked by the control 56, the validation encoding function is implemented by the means 52 operating on the secret derived key 16 and the challenge or random number 74. The token counter 34 decrements the token count The response 78, produced by the validation encoding function 52 and controlled by the control 56, is supplied through the serial Interface 42 to the comparison module 68. If an insufficient number of tokens are present, the IC either does not respond or responds with an invalid response 78. The other input to the comparison module is the output of the encoding function 66 operating on the secret derived key 64 in the terminal and on the challenge 74.

Commands from 72 to 56 can consist of, but are not limited to a validation command, a token decrement command or read card serial number command. There commands are encoded and transported through the serial interface 42.

The operation of the encoding function 60 on the issuer's key and the IC serial number, which is unique to the IC reader terminal, produces a secret derived key which should be identical to the secret derived key 16 in the IC. The encoding functions 52 and 66 are identical and thus, for a valid IC, the encoded output of the function 66 should be identical to the response 78.

The token counter value on the IC is error corrected by the error correction function 40. This ensures that errors are corrected during an IC transaction to improve the reliability of token storage. For example an error may have arisen during a previous transaction in that there might have been a power failure or the IC may have been removed from the terminal before the previous transaction was completed.

The IC reader thus calculates a predicted response for the IC by using the challenge value 74 and the secret derived key 64. The predicted response is compared to the IC response 78. If the two values match the IC and the transaction are accepted as valid. If no match is found the IC is rejected. If no tokens exist on the IC then the IC does not respond and the transaction is cancelled.

Information can be included in the challenge value 74. Thus the challenge value can be totally random but alternatively can be partially random with the remainder of the value being used to convey information, to the IC, for any desired purpose. This information can for example be used for token value confirmation.

On the other hand the IC which is being challenged can also replace a portion of the challenge with information or a command value before feeding it through the algorithm or encoding function 52 to generate the response 78. The device that originated the response can then do the reverse algorithm (decoding or decryption) to verify that the resultant value corresponds to part of the challenge. If it corresponds it could then accept the other part as valid information or a valid command. This mechanism can be usefully implemented with IC card systems, as well as other applications.

In one respect the the opertion of the system can be summarised as follows. The terminal presents a challenge to the IC by generating a random number and sending it to the IC. The IC transforms this challenge into a unique response, using an algorithm, only if the desired number of tokens is available and only after these tokens have been successfully deducted from the token counter. The response is returned to the IC reader and is correlated with a response which is predicted by the card reader. The IC and the IC reader use the secret derived number as the key to the algorithm.

If the correlation is successful the validity of the IC is proven and the token transaction is accepted.

The aforementioned mechanism is different from a design where an IC is authenticated with a challenge and response action which is not directly linked to the successful deduction of tokens.

The IC referred to hereinbefore may be provided in any suitable way and, particularly for token card use, on a plastic or similar card. Also, although the invention has been described with reference to an IC, the aforegoing principles can be embodied in any appropriate circuit.

## Claims

1. A method of operating a circuit which includes the steps of
a. accepting a challenge (74) and a count value decrement command;
b. implementing the decrement command;
c. generating a first response (78) to the challenge (74) using a first algorithm which operates on at least the challenge (74) and a secret key (16, 20A) derived from information identifying the individual circuit,
**characterized in that**
the first response (78) is generated only if the decrement command is implemented successfully.

2. A method according to claim 1 wherein the challenge is generated, and accepted, by the circuit, and a corresponding challenge is generated externally of the circuit.

3. A method according to claim 2 wherein the challenge is generated by a counter means in the circuit.

4. A method according to claim 3 wherein the counter means is controlled at least partly by means which is external to the circuit.

5. A method according to claim 1 wherein the challenge is generated externally of the circuit and is then accepted by the circuit.

6. A method according to claim 5 wherein the challenge includes at least one of the following: a number which is at least partly random, a command, and data relating to the circuit.

7. A circuit which includes
a. means (72, 52) for accepting a challenge (74) and a count value decrement command;
b. means (76) for implementing the decrement command;
c. means (52) for generating a first response (78) to the challenge (74) using a first algorithm which operates on at least the challenge (74) and a secret key (16, 20A) derived from information identifying the individual circuit;
**characterized in that**
the means (52) for generating the first response (78) generates the first response only if the means (76) for implementing the decrement command implemented the decrement command successfully.

8. A circuit according to claim 7 which includes means for generating the challenge.

9. A circuit according to claim 8 wherein the challenge generating means includes counter means.

10. A circuit according to claim 7 wherein the challenge includes at least one of the following: a number which is at least partly random, a command, and data relating to the circuit.

11. A circuit according to any one of the claims 7 to 10 which is an integrated circuit.

12. A circuit according to claim 11 wherein the integrated circuit is carried on a card.

## Patentansprüche

1. Verfahren zum Betreiben einer Schaltung mit den Schritten:
a. Akzeptieren einer Abfrage (74) und eines Zählwert-Abwärtszählbefehls,
b. Implementieren des Abwärtszählbefehls,
c. Erzeugen einer ersten Antwort (78) auf die Abfrage (74) unter Verwendung eines ersten Algorithmus', der zumindest auf die Abfrage (74) und einem geheimen Schlüssel (16, 20A), der aus die einzelne Schaltung identifizierenden Informationen hergeleitet wird, hin arbeitet,
**dadurch gekennzeichnet, dass** die erste Antwort (78) nur dann erzeugt wird, wenn der Abwärtszählbefehl erfolgreich implementiert worden ist.

2. Verfahren nach Anspruch 1, bei dem die Abfrage erzeugt und akzeptiert wird durch die Schaltung und eine korrespondierende Abfrage außerhalb der Schaltung erzeugt wird.

3. Verfahren nach Anspruch 2, bei dem die Abfrage durch Zählermittel in der Schaltung erzeugt wird.

4. Verfahren nach Anspruch 3, bei dem die Zählermittel zumindest teilweise durch Mittel außerhalb der Schaltung gesteuert werden.

5. Verfahren nach Anspruch 1, bei dem die Abfrage außerhalb der Schaltung erzeugt wird und dann durch die Schaltung akzeptiert wird.

6. Verfahren nach Anspruch 5, bei dem die Abfrage zumindest eines der folgenden umfasst:
eine Zahl, die zumindest teilweise zufällig, ein Befehl und auf die Schaltung bezogene Daten ist.

7. Schaltung mit
a. Mitteln (72, 52) zum Akzeptieren einer Abfrage (74) und eines Zählwert-Abwärtszählbefehls,
b. Mittel (76) zum Implementieren des Abwärtszählbefehls,
c. Mittel (52) zum Erzeugen einer ersten Antwort (78) auf die Abfrage (74) unter Verwendung eines ersten Algorithmus', der zumindest auf die Abfrage (74) und einen geheimen Schlüssel (16, 20a), der aus die einzelne Schaltung identifizierenden Informationen hergeleitet ist, hinarbeitet;
**dadurch gekennzeichnet, dass**
die Mittel (52) zum Erzeugen der ersten Antwort (78) die erste Antwort nur dann erzeugt, wenn die Mittel (76) zum Implementieren des Abwärtszählbefehls den Abwärtszählbefehl erfolgreich implementiert haben.

8. Schaltung nach Anspruch 7, die Mittel zum Erzeugen der Abfrage umfasst.

9. Schaltung nach Anspruch 8, bei der die die Abfrage erzeugenden Mittel Zählermittel umfassen.

10. Schaltung nach Anspruch 7, bei der die Abfrage mindestens eines der folgenden umfasst:
eine Zahl, die zumindest teilweise zufällig, ein Befehl und auf die Schaltung bezogene Daten ist.

11. Schaltung nach einem der Ansprüche 7 bis 10, die eine integrierte Schaltung ist.

12. Schaltung nach Anspruch 11, bei der die integrierte Schaltung auf einer Karte angeordnet ist.

## Revendications

1. Procédé d'exploitation d'un circuit comprenant les étapes consistant à :
- accepter une demande d'accès (74) et une commande de décrément de valeur de comptage ;
- mettre en oeuvre la commande de décrément ;
- produire une première réponse (78) à la demande d'accès (74) en utilisant un premier algorithme qui fonctionne avec au moins la demande d'accès (74) et une clé secrète (16, 20A) dérivée d'informations qui identifient le circuit individuel,
**caractérisé en ce que**
la première réponse (78) n'est engendrée que si la commande de décrément est mise en oeuvre avec succès.

2. Procédé selon la revendication 1 dans lequel la demande d'accès est engendrée et acceptée par le circuit, et dans lequel une demande d'accès correspondante est produite à l'extérieur du circuit.

3. Procédé selon la revendication 2 dans lequel la demande d'accès est engendrée par des moyens de comptage du circuit .

4. Procédé selon la revendication 3 dans lequel les moyens de comptage sont commandés au moins partiellement par des moyens qui sont extérieurs au circuit .

5. Procédé selon la revendication 1 dans lequel la demande d'accès est engendrée à l'extérieur du circuit et est ensuite acceptée par le circuit.

6. Procédé selon la revendication 5 dans lequel la demande d'accès comprend au moins un des éléments suivants : un nombre qui est au moins partiellement aléatoire, une commande et des données relatives au circuit.

7. Circuit comprenant
a. des moyens (72, 52) pour accepter une demande d'accès (74) et une commande de décrément de valeur de comptage ;
b. des moyens pour mettre en oeuvre la commande de décrément ;
c. des moyens (52) pour produire une première réponse (78) à la demande d'accès (74) en utilisant un premier algorithme qui fonctionne avec au moins la demande d'accès (74) et une clé secrète (16, 20A) dérivée d'informations qui identifient le circuit individuel,
**caractérisé en ce que**
les moyens (52) pour produire la première réponse (78) ne produit la première réponse que si les moyens (76) pour mettre en oeuvre la commande de décrément ont été mis en oeuvre avec succès.

8. Circuit selon la revendication 7 comprenant des moyens pour produire la demande d'accès.

9. Circuit selon la revendication 8 dans lequel les moyens pour produire la demande d'accès comprennent des moyens de comptage.

10. Circuit selon la revendication 7 dans lequel la demande d'accès comprend au moins un des éléments suivants : un nombre qui est au moins partiellement aléatoire, une commande et des données relatives au circuit .

11. Circuit selon l'une quelconque des revendications 7 à 10 constitué par un circuit intégré.

12. Circuit selon la revendication 11 dans lequel le circuit intégré est porté sur une carte.
